# EUROPEAN PATENT SPECIFICATION

(11) **EP 2 318 237 B1**
(45) Date of publication and mention of the grant of the patent: **14.08.2013**
(21) Application number: 09766889.1
(22) Date of filing: 17.06.2009
(51) Int. Cl.: B60R 19/18

(54) **IMPACT BEAM AND A METHOD FOR MAKING SAME**
EINSCHLAGSBALKEN UND VERFAHREN ZU SEINER HERSTELLUNG
PARE-CHOCS ET PROCÉDÉ DE FABRICATION CORRESPONDANT

(30) Priority: 20.06.2008 NO 20082828
(43) Date of publication of application: 11.05.2011
(73) Proprietor: Benteler Automobiltechnik GmbH, 33102 Paderborn (DE)
(72) Inventor: MOEN, Lars, N-0587 Oslo (NO); PAULSEN, Frode, N-2819 Gjøvik (NO)
(74) Representative: Griepenstroh, Jörg
(86) International application number: PCT/NO2009/000225
(87) International publication number: WO 2009/154471

(56) References cited:
- WO-A2-2005/018995
- WO-A2-2005/018995
- DE-A1- 19 610 143
- JP-A- 1 022 653
- US-A- 5 104 026
- US-A- 5 803 517
- US-A- 5 845 948
- US-A1- 2004 169 380
- US-A1- 2004 169 380

## Description

The present invention relates to an impact beam system. In particular the invention relates to an impact beam, such as a bumper, for a vehicle. Further, the invention relates to a method for making an impact beam.

The ability of an impact member to absorb energy will normally be dependent upon many issues. Among these, important physical parameters are the global and local shape of the impact member including its mounting to the vehicle, versus the direction and the location of the load to be absorbed. Many modern vehicles tend to become more and more compact, with less absorbing space available. Even low speed frontal crashes could be very costly to repair, due to the compact arrangement of radiator, AC-cooler, automatic transmission cooler, and other vulnerable components arranged in exposed areas of a vehicle, in particular the frontal part.

Due to certain consumer oriented regulations in some markets, there are defined certain standards regarding low speed crashes and how much damage that should be accepted in such situations.

Recently, it has been put focus on the situation when a crash occurs with a vertical offset hit, i.e. the corresponding impact beams or the similar of two vehicles are located at different vertical levels during the crash. The damages caused to the vehicle(-s) in these types of crash situations could be very expansive to repair, even when occurred at low speed. Further, the introduction and popularity of SUVs (Sport Utility Vehicles) has increased the frequency of offset crashes substantially.

In the prior art, there are known solutions that relates to improving the ability to absorb collision energy at a reasonable package size of the bumper system.

For instance, US 7,066,525 discloses a bumper beam with a "Wishbone Beam" design, which allows bumper contact with an impactor as early as possible in the impact "event". The center section of the bumper is curved in a forward direction outward towards the fascia. This solution relates to less package space or depth needed between the rail ends and the fascia in order to absorb the same amount of energy as a typically mounted bumper profile. However, it is not shown how this system will work in a vertical offset crash situation.

US 5,104,026 A discloses a bumper bar for vehicles according to the preamble of claim 1, formed from rolled sheet steel having a dosed tubular profile. The bumper bar has a cross-section where at least a part of the back wall is continuously slanted in his longitudinal direction,

US 2004/0169380 A1 discloses a bumper bar for vehicles formed from rolled sheet steel having a generally box-like configuration. The box may be completely closed by securing the free edges for example by welding. The bumper bar has a cross-section where at least a part of the back wall is continuously curved in his longitudinal direction. Additional the bumper bar is sectional twisted about his elongate axis to get a better adaption concerning to the cross-section of the cover of the bumper system

The problem to be solved by the invention is to improve an impact beam system, wherein the crash behaviour of the beam is varied in its longitudinal direction.

In accordance with the present invention, it can now be possible to absorb more energy in an offset crash situation without destroying components arranged behind said bumper. This feature can be obtained by a bumper beam having a twisted section and/or a slanted inner wall.

The invention shall in the following be further described by examples and Figures where:
- Fig. 1a: discloses schematically a bumper beam system in accordance with the invention and an obstruction, seen from above,
- Fig. 1b: discloses three cross sections of the bumper beam as shown in Fig. 1a,
- Fig. 1c: discloses a cross section A-A through the bumper system and the impactor as shown in Fig. 1a,
- Fig. 2a: discloses a cross-section of a prior art beam before being deformed in a crash,
- Fig. 2b: discloses the cross-section of a prior art beam after being deformed in a crash,
- Fig. 3a: discloses the cross section A'-A' of the beam shown in Fig 1c before a crash,
- Fig. 3b: discloses the beam in Fig 3a after crash,
- Fig. 4a: discloses a second embodiment of a beam cross section before a crash,
- Fig. 4b: discloses the beam in Fig 4a after crash.

Commonly a bumper beam system comprises a beam supported by two crash boxes fixed to a vehicle, for instance to the longitudinals thereof.
An offset impact between such a bumper beam and one obstruction can create the following main deformations;
   1) Local collapse of the bumper's cross section
   2) Bending of the beam
   3) Twisting of the beam

The two latter deformations will in an impact situation be acting rather global in the bumper beam system, and will be main contributors to the fact that the beam can approach vulnerable components in the vehicle.

It should be understood that in the impact there is the relative velocity between the vehicle and the obstruction that represents the crash energy to be handled by the bumper system. Therefore, the invention relates to all situations where the vehicle and/or the obstruction are/is moving.

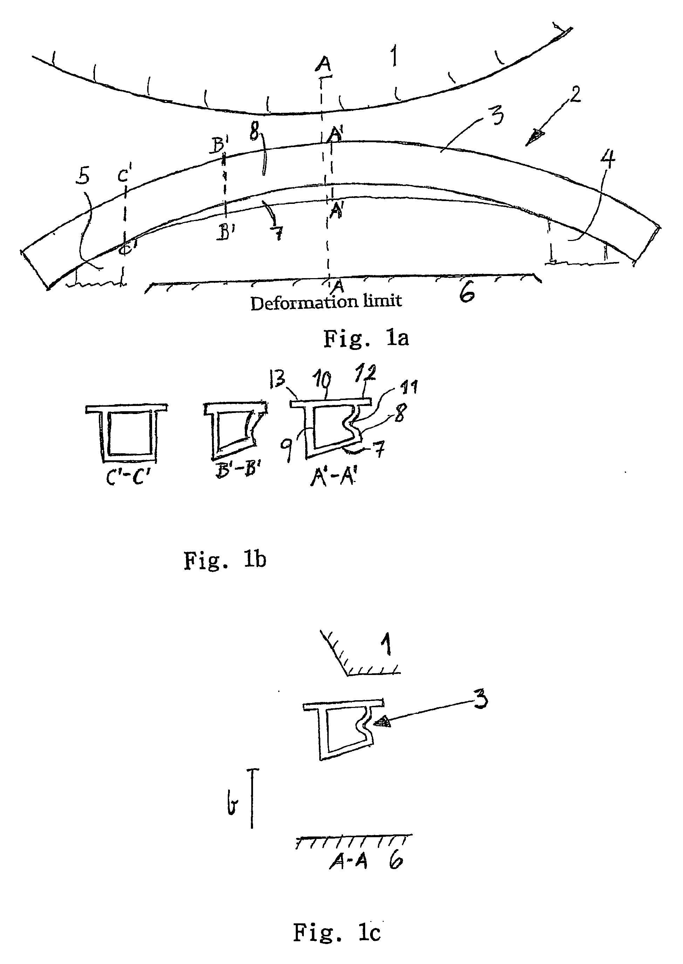

In Fig. 1a is shown schematically from above a bumper beam system 2 comprising a bumper beam 3 having two crashboxes 4, 5 fixed to it. The crashboxes are at their opposite ends fixed to the vehicle, for instance to the longitudinals thereof. Further, an obstruction 1 is shown. The maximum compression of the bumper system 2 in the vehicle's longitudinal direction until a certain defined deformation limit 6 in the vehicle has been reached, is denoted "b", see Fig. 1c which discloses a cross section view through line A-A of Fig. 1a..

Fig. 1b discloses various cross sections A'-A', B'-B' and C'-C' of the bumper beam 3 as indicated in Fig. 1a. The bumper beam of Fig. 1a is symmetric with regard to the cut A'-A' at its mid region, thus only cross sections of one semi section has been disclosed here.

Cross section C'-C' indicates that the bumper beam is of a rectangular shape in the region where it is attached to the crash box 5. In cross section B'-B' somewhere between C'-C' and A'-A', the back wall 7 of the beam is somewhat slanted with an angular position and the upper wall 8 is formed with an indentation 11. In this example the indentation is facing towards the interior space of the beam. However, it should be understood that the indentation may also be facing towards the external space of the beam.

The back wall is slanted to a maximum angular position at the mid region of the bumper, i.e. at cross section A'-A'. Further, the cross section has one lower wall 9 and one front wall 10 with flanges 12, 13. As will be seen In the Fig., the cross section has a substantial trapezoidal shape.

The variation of the cross sections of the beam across its length can be processed in a forming process. The beam can be twisted and the indentation can be pressed inwards by appropriate tooling.

Alternatively, the blank to be processed is represented by a hollow, extruded profile having a rectangular cross section, that is further processed (preferably by compression) to actual shape. In its processed state, the cross section may or may not have an indentation 11 in at least one of its side walls 8. The indentation may be pressed inwards or outwards.

The method for making an impact beam 3 in accordance with the invention is defined in claim 8.

Alternatively, the extruded profile may have a cross section with a preformed, slanted back wall 7 where the profile is subsequently formed at its two end regions to have a cross section suitable to be attached to crashboxes or the similar. Preferably such cross section should be mainly rectangular, but also other geometrical shapes may be relevant.

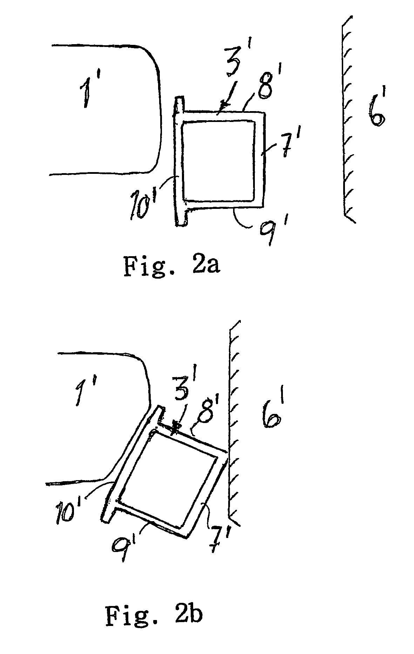

In Fig. 2a there is shown a cut through of a prior art bumper beam 3' having a mainly rectangular cross section comprising an upper wall 8', a front wall 10', a lower wall 9' and a back wall 7'.

This view is similar to the view of Fig. 1c, but rotated 90 degrees anti clock wise. Similar to that of Fig. 1c there is shown an obstruction 1' and a deformation limit 6' of the vehicle. This is the situation before an impact has taken place.

In Fig. 2c an impact has taken place and the bumper beam 3' has rotated clock wise due to the offset crash. This is due to a global twisting of the bumper beam. As illustrated, the upper corner of the beam facing the deformation limit in the vehicle, has exceeded this limit.

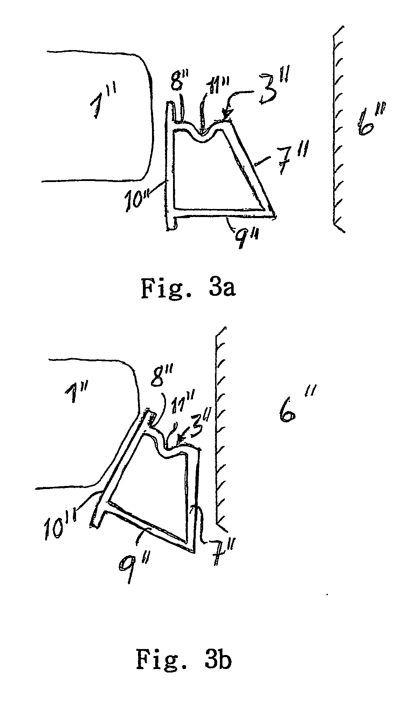

In Fig. 3a there Is shown a bumper beam having the cross-section A-A of the bumper beam shown in Fig. 1c where obstruction 1", bumper beam 3" and deformation limit 6" are resting in a non deformed state. The cross-section of the bumper beam 3" is in this example mainly trapezoidal. In addition, the upper wall 8" of the cross section has one indentation 11". The cross section further comprises a front wall 10", a lower wall 9" and a back wall 7".

As seen in Fig. 3b, which is the situation after a crash causing deformations of the bumper beam in Fig. 3a, it is clearly seen that the trapezoidal shape Is rotated as a result from the crash. However, due to the slanted wall facing the deformation limit 6", it has taken a position substantialty in parallel with the deformation limit, without exceeding this limit.

The cross-sectional bending stiffness in the section 3' is similar to that of section 3" and 3"', based upon the same overall dimensions.

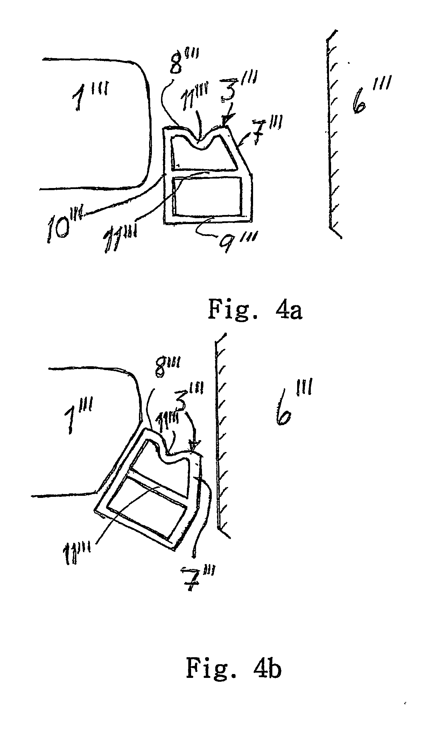

Figure 4a discloses a second embodiment of a preferred bumper beam cross section. The bumper beam 3'" in this embodiment is of a two section type and have one rectangular part and one substantial trapezoidal part that have one wall in common which in fact is an internal dividing wall 11"' of the all over cross section. One side of the trapezoidal part may have an indentation 8'" formed as a concave side wall, while one inner wall facing towards the car is slanted. The cross section further comprises an upper wall 8"', a front wall 10", a lower wall 9" and a back wall 7".

In the Figure, one obstruction 1"' is located in front of the bumper 3"'. The deformation limit is indicated at 6"'.

Figure 4b discloses the situation shown in Fig. 4a after an impact or crash has occurred. As can be seen, the whole cross section is rotated clockwise, and the slanted wall 7'" tends to be in parallel with the deformation limit 6"'. One effect of the dividing wall is that the beam is divided into two chambers. This type of beams has good structural properties that make them suitable for impacts.

An offset impact between bumper beam and an obstruction creates twisting of the beam due to torsional forces. With traditional rectangular cross-sections of the bumper beam deformation limit is reached early as indicated in Figure 2a-b. In accordance with the present invention, the beam part facing the deformation limit may be pre-defined to a shape following the deformation limit in the final stage of deformation. For instance a trapezoidal shape with a slanted back wall can be applied. However, other appropriate shapes can be applied for this purpose as well.

In accordance with the present invention, the cross-section of the bumper beam varies along its length (in the transversal direction of the vehicle). For instance, it has a pronounced trapezoidal cross-section or being similarly pre-twisted at its mid-section. Further, the beam may have reinforcements such as inserts or thicker profile walls at regions where the desired behaviour in an offset crash situation can be achieved.

It should be understood that the hollow profile blank may be initially manufactured (extruded) with a cross sectional shape having a slanted or curved wall and further successively processed to a more pronounced shape at appropriate region(-s).

In the above examples the described offset impact has hit the bumper beam in its upper region causing a twisting deformation of the beam where the upper back corner of the beam has approached the deformation limit. This is typical for a situation where the bumper system belongs to a small vehicle or passenger vehicle, while the obstruction belongs to a utility vehicle. However, if the bumper system was arranged at an utility vehicle and the obstruction was represented by a passenger vehicle or the like, then the twisting of the bumper beam would have been forced the opposite direction and the cross section should in that event have been designed other wise. In stead of having a upwards/forwards slanting back wall of the beam, this should be designed with a backwards/forwards slanted back wall to enhance the possibility of twisting deformation without reaching the deformation limit.

If simulations or other design criterions show that a curved back wall will be the most universal design due to other forces likely to occur in an impact situation, this should be given weight in the design study of an impact beam in accordance with the invention. For instance, a convex back wall may overcome the uncertainty factor whether an impact is likely to occur above the twist axis (normally the y-axis of the beam) or below this axis.

The way of carrying out the above mentioned types of embodiments would be obvious for the skilled reader, and is therefore not described further in detail here.

In the above examples there are described impact bumper beams. However, it should be understood that the principles of the invention are not limited to impact bumpers, but would be applicable also in other context where off set impacts may occur.

Preferably the impact beam is made out of aluminium or an aluminium alloy.

## Claims

1. Impact beam system, in particular a bumper beam system for a vehicle, where the beam (3, 3", 3"') approaches one deformation limit (6, 6", 6"') due to twisting deformation of the beam following one impact, wherein
at least a part of the bumper beam has a cross-section where at least a part of the back wall (7, 7", 7"') is slanted or curved with regard to its vertical extension to compensate for the twisting deformation of the beam and
the back wall of the bumper beam is more slanted or curved in the mid region of the beam than at its ends, **characterised in that** the beam is of a hollow section type, wherein
said cross-section of the bumper beam is substantialiy trapezoidal where one slanted wall represents the back wall and is facing the deformation limit
or
said cross-section is a multi-chamber section which has one rectangular section and one substantially trapezoidal section where one slanted wall represents the back wall and is facing the deformation limit.

2. Impact beam in accordance with claim 1,
**characterised in that**
said cross-section is provided with a substantial convex wall facing the deformation limit.

3. Impact beam in accordance with claim 1,
**characterised in that**
said cross section is of a two chamber type.

4. Impact beam in accordance with claim 1,
**characterised in that**
said cross-section is of a three chamber type.

5. Impact beam in accordance with claim 1,
**characterised in that**
said cross-section is provided with reinforcements such as inserts or thicker profile walls at regions where the desired behaviour in a crash situation can be achieved.

6. Impact beam in accordance with claim 1,
**characterised in that**
it is made out of aluminium or an aluminium alloy.

7. Impact beam in accordance with claim 1,
**characterised in that**
it is made out of an extruded profile.

8. A method for making an impact beam (3, 3", 3"') including the following steps; extruding one profile, cutting the profile to appropriate length, thus producing one blank with two ends and a mid region between said two ends, and where the cross section of the blank comprises at least one upper wall, one lower wall, one back wall and one front wall, wherein
at least one of the upper wall or the lower wall is formed in at least one region of the extension of the blank so that the angular position of the back wall (7, 7", 7"') in the finished impact beam is altered in this part, **characterised in that** the blank is formed at its mid region by compressing the at least one of the upper wall (8, 8", 8"') or the lower wall (9, 9", 9'"), and is further represented by an indentation (11, 11", 11"').

9. A method in accordance with claim 8,
**characterised in that**
the blank is formed at its end regions by the use of a mandrel or the similar.

10. A method in accordance with claim 8,
**characterised in that**
the indentation is facing towards the interior space of the beam (3, 3", 3"').

11. A method in accordance with claim 8,
**characterised in that**
the indentation is facing towards the exterior space of the beam (3, 3", 3"').

## Patentansprüche

1. Aufprallbalkensystem, insbesondere ein Stoßfängerbalkensystem für ein Fahrzeug, bei dem sich der Balken (3, 3", 3"') infolge Verdrehungsverformung des Balkens nach einem Aufprall einer Verformungsbegrenzung (6, 6", 6"') nähert, wobei
mindestens ein Teil des Stoßfängerbalkens einen Querschnitt aufweist, bei dem mindestens ein Teil der hinteren Wand (7, 7", 7"') in Bezug auf ihre vertikale Ausdehnung geneigt oder gekrümmt ist, um die Verdrehungsverformung des Balkens auszugleichen; und
die hintere Wand des Stoßfängerbalkens in der Mittenregion des Balkens mehr geneigt bzw. gekrümmt ist als an seinen Enden, **dadurch gekennzeichnet, dass**
der Balken vom Typ mit Hohlquerschnitt ist, wobei
der Querschnitt des Stoßfängerbalkens im Wesentlichen trapezförmig ist, wobei eine geneigte Wand die hintere Wand darstellt und der Verformungsbegrenzung zugewandt ist,
oder
der Querschnitt ein Mehrkammerquerschnitt ist, der einen rechteckigen Querschnitt und einen im Wesentlichen trapezförmigen Querschnitt aufweist, bei dem eine geneigte Wand die hintere Wand darstellt und der Verformungsbegrenzung zugewandt ist.

2. Aufprallbalken nach Anspruch 1, **dadurch gekennzeichnet, dass** der Querschnitt mit einer im Wesentlichen konvexen Wand versehen ist, die der Verformungsbegrenzung zugewandt ist.

3. Aufprallbalken nach Anspruch 1, **dadurch gekennzeichnet, dass** der Querschnitt vom Typ mit zwei Kammern ist.

4. Aufprallbalken nach Anspruch 1, **dadurch gekennzeichnet, dass** der Querschnitt vom Typ mit drei Kammern ist.

5. Aufprallbalken nach Anspruch 1, **dadurch gekennzeichnet, dass** der Querschnitt an Regionen, wo das gewünschte Verhalten in einer Zusammenstoßsituation erreicht werden kann, mit Verstärkungen, wie etwa Einlagen oder dickeren Profilwänden versehen ist.

6. Aufprallbalken nach Anspruch 1, **dadurch gekennzeichnet, dass** er aus Aluminium oder einer Aluminiumlegierung hergestellt ist.

7. Aufprallbalken nach Anspruch 1, **dadurch gekennzeichnet, dass** er aus einem extrudierten Profil hergestellt ist.

8. Verfahren zum Herstellen eines Aufprallbalkens (3, 3", 3"'), das folgende Schritte umfasst: Extrudieren eines Profils, Schneiden des Profils auf die geeignete Länge, sodass ein Rohling mit zwei Enden und einer Mittenregion zwischen den zwei Enden erzeugt wird und bei dem der Querschnitt des Rohlings mindestens eine obere Wand, eine untere Wand, eine hintere Wand und eine vordere Wand umfasst, wobei
mindestens eine von der oberen Wand oder der unteren Wand in mindestens einer Region der Ausdehnung des Rohlings derart geformt ist, dass die Winkelposition der hinteren Wand (7, 7", 7"') in dem fertigen Aufprallbalken in diesem Teil geändert ist, **dadurch gekennzeichnet, dass**
der Rohling an seiner Mittenregion geformt wird, indem die mindestens eine von der oberen Wand (8, 8", 8"') oder der unteren Wand (9, 9", 9"') zusammengedrückt wird und weiter durch einen Eindruck (11, 11 ", 11"') dargestellt wird.

9. Verfahren nach Anspruch 8, **dadurch gekennzeichnet, dass** der Rohling an seinen Endregionen durch die Verwendung eines Dorns oder dergleichen geformt wird.

10. Verfahren nach Anspruch 8, **dadurch gekennzeichnet, dass** der Eindruck dem Inneren des Balkens (3, 3", 3"') zugewandt ist.

11. Verfahren nach Anspruch 8, **dadurch gekennzeichnet, dass** der Eindruck dem Äußeren des Balkens (3, 3", 3"') zugewandt ist.

## Revendications

1. Système de poutre pare-chocs, en particulier système de poutre pare-chocs pour un véhicule, dans lequel la poutre (3, 3", 3"') se rapproche d'une limite de déformation (6, 6", 6"') en raison d'une déformation à la torsion de la poutre à la suite d'un premier impact, dans lequel au moins une partie de la poutre pare-chocs a une
section transversale dans laquelle au moins une partie de la paroi arrière (7, 7", 7"') est inclinée ou incurvée par rapport à son extension verticale pour compenser la déformation à la torsion de la poutre et
la paroi arrière de la poutre pare-chocs est plus
inclinée ou incurvée dans la région centrale de la poutre qu'à ses extrémités, **caractérisé en ce que** la poutre est d'un type à section creuse, dans
laquelle
ladite section transversale de la poutre pare-chocs
est sensiblement trapézoïdale, où une paroi inclinée représente la paroi arrière et se trouve confrontée à la limite de déformation,
ou
ladite section transversale est une section multi-chambre qui présente une section rectangulaire et une section sensiblement trapézoïdale, où une paroi inclinée représente la paroi arrière et est confrontée à la limite de déformation.

2. Poutre pare-chocs selon la revendication 1, **caractérisée en ce que**
ladite section transversale est pourvue d'une paroi
sensiblement convexe confrontée à la limite de déformation.

3. Poutre pare-chocs selon la revendication 1, **caractérisée en ce que**
ladite section transversale est d'un type à deux
chambres.

4. Poutre pare-chocs selon la revendication 1, **caractérisée en ce que**
ladite section transversale est d'un type à trois
chambres.

5. Poutre pare-chocs selon la revendication 1, **caractérisée en ce que**
ladite section transversale est pourvue de renforts
tels que des pièces rapportées ou des parois de profils plus épais dans des régions où le comportement souhaité dans une situation de collision puisse être obtenu.

6. Poutre pare-chocs selon la revendication 1, **caractérisée en ce que**
elle est constituée d'aluminium ou d'un alliage
d'aluminium.

7. Poutre pare-chocs selon la revendication 1, **caractérisée en ce que**
elle est constituée d'un profilé extrudé.

8. Procédé de fabrication d'une poutre pare-chocs (3, 3", 3"') comprenant les étapes suivantes consistant à : extruder un profilé, couper le profilé à la longueur appropriée, en produisant de la sorte une ébauche avec deux extrémités et une région centrale entre lesdites deux extrémités, et dans lequel la section transversale de l'ébauche comprend au moins une paroi supérieure, une paroi inférieure, une paroi arrière et une paroi avant, dans lequel
au moins l'une de la paroi supérieure ou de la paroi
inférieure est formée dans au moins une région de l'extension de l'ébauche de sorte que la position angulaire de la paroi arrière (7, 7", 7"') dans la poutre pare-chocs finie soit modifiée dans cette partie, **caractérisé en ce que** l'ébauche est formée dans sa région centrale en
comprimant la au moins une paroi de la paroi supérieure (8, 8", 8"') ou de la paroi inférieure (9, 9", 9"') et est en outre représentée par une indentation (11, 11'', 11"').

9. Procédé selon la revendication 8,
**caractérisé en ce que**
l'ébauche est formée dans ses régions d'extrémité par
l'utilisation d'un mandrin ou similaire.

10. Procédé selon la revendication 8,
**caractérisé en ce que**
l'indentation est tournée vers l'espace intérieur de
la poutre (3, 3", 3"').

11. Procédé selon la revendication 8,
**caractérisé en ce que**
l'indentation est tournée vers l'espace extérieur de
la poutre (3, 3", 3"').
